# EUROPEAN PATENT APPLICATION

(11) **EP 4 080 381 A1**
(43) Date of publication of application: **26.10.2022**
(21) Application number: 20901335.8
(22) Date of filing: 20.11.2020
(51) Int. Cl.: G06F 16/34

(54) **METHOD AND APPARATUS FOR GENERATING PATENT SUMMARY INFORMATION, AND ELECTRONIC DEVICE AND MEDIUM**

(30) Priority: 19.12.2019 CN 201911319575
(71) Applicant: Patsnap Limited, Jiangsu 215000 (CN)
(72) Inventor: HAENSE, Markus, Suzhou, Jiangsu 215000 (CN); ZHANG, Cheng, Suzhou, Jiangsu 215000 (CN); CAI, Jie, Suzhou, Jiangsu 215000 (CN); YUAN, Ming, Suzhou, Jiangsu 215000 (CN); LU, Yunfang, Suzhou, Jiangsu 215000 (CN)
(74) Representative: ABG Intellectual Property Law, S.L.
(86) International application number: PCT/CN2020/130300
(87) International publication number: WO 2021/120979

(57) **Abstract**

Disclosed are a method and an apparatus for generating patent summary information, and an electronic device and a computer readable medium. The method for generating patent summary information includes: extracting technical problem information from a target patent document (201); extracting solution information from the target patent document (202); and generating the patent summary information based on the technical problem information and the solution information (203).

## Description

The present application claims priority to Chinese Patent Application No. 201911319575.9 filed with the Chinese Patent Office on December 19, 2019, which is incorporated herein by reference in its entirety.

### TECHNICAL FIELD

The present disclosure relates to the field of computer technologies, and in particular, to a method and an apparatus for generating patent summary information, and an electronic device and a medium.

### BACKGROUND

With the development of Internet technology, increasing amount of information is obtained by Internet users from the network. How to quickly obtain effective information from massive information has always been a research hot-spot in the field of information retrieval. Text summarization technology is a common technology for extracting effective information, in which a computer is usually used to process a natural language text and automatically extract, from the natural language text, part of content that may accurately reflect central content of the text. Such technology for extracting effective information helps reduce an information overload problem faced by Internet users, and helps users locate information they need from the Internet faster and more efficiently.

### SUMMARY

The present disclosure provides a method and an apparatus for generating patent summary information, and an electronic device and a medium, so as to obtain effective patent information from massive patent information.

A method for generating patent summary information is provided, and the method includes:
extracting technical problem information from a target patent document;
extracting solution information from the target patent document; and
generating the patent summary information based on the technical problem information and the solution information.

A method for generating technical problem information is further provided, and the method includes:
extracting, from a target patent document, at least one candidate sentence related to a technical problem;
determining a target candidate sentence from the at least one candidate sentence, where the target candidate sentence includes at least one of the following: a sentence matched with a subject of the target patent document and a sentence of a predefined category; and
generating the technical problem information based on the determined target candidate sentence.

A method for generating solution information is further provided, and the method includes:
extracting at least one candidate technical solution sentence from claims and/or specification of a target patent document;
for each candidate technical solution sentence in the at least one candidate technical solution sentence, determining a group of dominant features of the candidate technical solution sentence, and scoring or classifying the candidate technical solution sentence according to the group of dominant features;
determining, based on a result of scoring or classification, whether the candidate technical solution sentence is a technical solution sentence; and
generating the solution information based on the determined technical solution sentence.

A method for generating component content information is further provided, and the method includes:
extracting a claim sentence from a target patent document;
determining whether the claim sentence corresponds to a product claim or a method claim;
in response to determining that the claim sentence corresponds to the product claim, extracting component information from the claim sentence;
extracting, from the claim sentence, component relationship information of components represented by the component information; and
generating the component content information based on the component information and the component relationship information.

An apparatus for generating patent summary information is further provided, and the apparatus includes:
a technical problem extraction unit, configured to extract technical problem information from a target patent document;
a solution extraction unit, configured to extract solution information from the target patent document; and a patent summary information generation unit, configured to generate the patent summary information based on the technical problem information and the solution information.

An apparatus for generating technical problem information is further provided, and the apparatus includes:
a candidate sentence extraction unit, configured to extract, from a target patent document, at least one candidate sentence related to a technical problem;
a candidate sentence determining unit, configured to determine a target candidate sentence from the at least one candidate sentence, where the target candidate sentence includes at least one of the following: a sentence matched with a subject of the target patent document; and a sentence of a predefined category; and
a technical problem information generation unit, configured to generate the technical problem information based on the determined target candidate sentence.

An apparatus for generating solution information is further provided, and the apparatus includes:
a candidate technical solution sentence extraction unit, configured to extract at least one candidate technical solution sentence from claims and/or specification of a target patent document;
a candidate technical solution sentence determining unit, configured to: for each candidate technical solution sentence in the at least one candidate technical solution sentence, determine a group of dominant features of the candidate technical solution sentence, score or classify the candidate technical solution sentence according to the group of dominant features, and determine, based on a result of scoring or classification, whether the candidate technical solution sentence is a technical solution sentence; and
a solution information generation unit, configured to generate the solution information based on the determined technical solution sentence.

An apparatus for generating component content information is further provided, and the apparatus includes:
a claim sentence extraction unit, configured to extract a claim sentence from a target patent document;
a claim determining unit, configured to determine whether the claim sentence corresponds to a product claim or a method claim;
a component information extraction unit, configured to: when determining that the claim sentence corresponds to the product claim, extract component information from the claim sentence;
a component relationship information extraction unit, configured to extract, from the claim sentence, component relationship information of components represented by the component information; and
a component content information generation unit, configured to generate component content information based on the component information and the component relationship information.

An electronic device is further provided and includes:
one or more processors; and
a storage device, configured to store one or more programs.

When the one or more programs are executed by the one or more processors, the one or more processors are enabled to implement the method described above.

A non-transitory computer readable storage medium is further provided, and a computer program is stored on the computer readable storage medium. When the program is executed by a processor, the method described above is implemented.

### BRIEF DESCRIPTION OF DRAWINGS

FIG. 1 is a schematic diagram of an application scenario of a method for generating patent summary information according to an embodiment of the present disclosure.
FIG. 2 is a flowchart of a method for generating patent summary information according to an embodiment of the present disclosure.
FIG. 3 is a flowchart of a method for generating technical problem information according to an embodiment of the present disclosure.
FIG. 4 is a flowchart of a method for generating solution information according to an embodiment of the present disclosure.
FIG. 5 is a flowchart of a method for generating component content information according to an embodiment of the present disclosure.
FIG. 6 is a flowchart of a method for generating beneficial effect information according to an embodiment of the present disclosure.
FIG. 7 is a flowchart of a method for generating technical field information according to an embodiment of the present disclosure.
FIG. 8 is a schematic structural diagram of an apparatus for generating patent summary information according to an embodiment of the present disclosure.
FIG. 9 is a schematic structural diagram of an apparatus for generating technical problem information according to an embodiment of the present disclosure.
FIG. 10 is a schematic structural diagram of an apparatus for generating solution information according to an embodiment of the present disclosure.
FIG. 11 is a schematic structural diagram of an apparatus for generating component content information according to an embodiment of the present disclosure.
FIG. 12 is a schematic structural diagram of an apparatus for generating beneficial effect information according to an embodiment of the present disclosure.
FIG. 13 is a schematic structural diagram of an apparatus for generating technical field information according to an embodiment of the present disclosure.
FIG. 14 is a schematic structural diagram of an electronic device according to an embodiment of the present disclosure.

### DETAILED DESCRIPTION

The embodiments of the present disclosure are described below with reference to the accompanying drawings. Although the accompanying drawings show some embodiments of the present disclosure, the present disclosure may be implemented in various forms.

For convenience of description, only the parts related to the disclosure are shown in the accompany drawings.

Terms such as "first" and "second" mentioned in the present disclosure are only used to distinguish between different apparatuses, modules, or units, and are not used to limit the order or interdependence relation of functions performed by these apparatuses, modules, or units.

Terms "a" and "a plurality of' mentioned in the present disclosure are illustrative rather than restrictive, and should be understood as "one or more" unless otherwise specified clearly in the context.

The names of messages or information exchanged between a plurality of apparatuses in the implementations of the present disclosure are only for illustrative purposes, and are not intended to limit the scope of these messages or information.

The present disclosure is described below with reference to the drawings and embodiments.

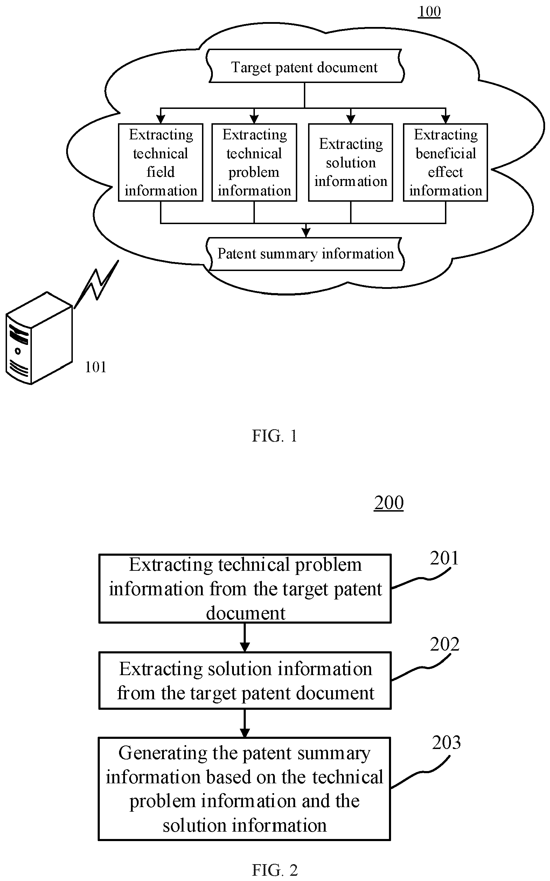

FIG. 1 is a schematic diagram of an application scenario of a method for generating patent summary information according to an embodiment of the present disclosure. In an application scenario 100 of FIG. 1, a user first selects a patent document as a target patent document. Then, an electronic device 101 (shown as a server in FIG. 1) analyzes the target patent document, and extracts technical field information, technical problem information, solution information, and beneficial effect information. Finally, the patent summary information is generated based on the technical field information, the technical problem information, the solution information and the beneficial effect information.

The electronic device 101 may be hardware or software. When being hardware, the electronic device may be implemented as a distributed cluster including a plurality of servers or terminal devices, or may be implemented as a single server or terminal device. When being software, the electronic device may be implemented as a plurality of pieces of software or a plurality of software modules, for example, for providing a distributed service, or may be implemented as a single piece of software or a single software module. This is not limited herein.

Referring to FIG. 2, FIG. 2 is a flowchart 200 of a method for generating patent summary information according to an embodiment of the present disclosure. The method for generating patent summary information includes the following steps.

Step 201: Extracting technical problem information from a target patent document.

In some embodiments, an execution body (for example, the electronic device 101 shown in FIG. 1) of the method for generating patent summary information may extract, from the target patent document, at least one candidate sentence related to a technical problem by using various grammatical analysis methods. The grammatical analysis methods include but are not limited to at least one of the following: syntactic analysis, part-of-speech analysis and coreference resolution.

In some embodiments, the execution body may input each candidate sentence in the at least one candidate sentence into a pre-trained extraction model to determine whether the candidate sentence is a sentence of a predefined category. The predefined category may be a category strongly related to the technical problem.

The extraction model may be a machine learning model (for example, a classification task model). The extraction model may be obtained through training by using the following steps.

First, obtaining a set of positive training samples and a set of negative training samples.

The positive training samples may be accurate sentences in a sample patent document that are strongly related to the technical problem and are obtained through the grammatical analysis methods such as syntactic analysis, part-of-speech analysis and coreference resolution. The negative training samples may be sentences in the sample patent document that are weakly or irrelevant to the technical problem.

Second, training an initial machine learning model based on the set of positive training samples and the set of negative training samples, to obtain the extraction model.

The obtained extraction model may learn different features of a negative emotion expression and different forms of a problem expression from the training samples, so as to achieve a generalization capability.

In some embodiments, For example, the execution body may combine a plurality of candidate sentences of a predefined category to generate the technical problem information.

Step 202: Extracting solution information from the target patent document.

In some embodiments, the execution body may extract at least one candidate technical solution sentence from claims and/or specification of the target patent document.

In some embodiments, for each candidate technical solution sentence in the at least one candidate technical solution sentence, the execution body may determine a group of dominant features of the candidate technical solution sentence, and score or classify the candidate technical solution sentence according to the group of dominant features.

In some embodiments, the execution body may determine, based on the scoring, whether the candidate technical solution sentence is a technical solution sentence; and generate the solution information based on the determined technical solution sentence.

Step 203: Generating patent summary information based on the technical problem information and the solution information.

In some embodiments, the execution body may combine the obtained technical problem information and solution information to generate patent summary information.

In some optional implementations of some embodiments, the extracting technical problem information from a target patent document includes: extracting, from the target patent document, at least one candidate sentence related to a technical problem; determining a target candidate sentence from the at least one candidate sentence, where the target candidate sentence includes at least one of the following: a sentence matched with a subject of the target patent document and a sentence of a predefined category; and generating the technical problem information based on the determined target candidate sentence.

For example, first, the execution body may extract, from the target patent document, at least one candidate sentence related to a technical problem by using various grammatical and syntactic analysis methods. Then, for each candidate sentence in the at least one candidate sentence, a pre-trained extraction model is used to determine whether the candidate sentence is a sentence of a predefined category. Finally, a plurality of candidate sentences of the predefined category are combined to generate the technical problem information.

In some optional implementations of some embodiments, the extracting solution information from the target patent document includes: extracting at least one candidate technical solution sentence from claims and/or specification of the target patent document; for each candidate technical solution sentence in the at least one candidate technical solution sentence, determining a group of dominant features of the candidate technical solution sentence, and scoring or classifying the candidate technical solution sentence according to the group of dominant features; determining, based on the scoring, whether the candidate technical solution sentence is a technical solution sentence; and generating the solution information based on the determined technical solution sentence.

For example, first, the execution body may perform keyword detection on the specification of the target patent document, and then extract a sentence where the detected keyword is located as a candidate technical solution sentence. Next, the execution body may determine, based on scoring, whether the candidate technical solution sentence is a technical solution sentence. Finally, the execution body may generate the solution information based on the determined technical solution sentence.

In some optional implementations of some embodiments, the method further includes: in response to the at least one candidate technical solution sentence including a claim sentence, determining whether the claim sentence corresponds to a product claim or a method claim; in response to determining that the claim sentence corresponds to the product claim, extracting component information from the claim sentence; extracting, from the claim sentence, component relationship information of components represented by the component information; and generating component content information based on the component information and the component relationship information.

For example, first, the execution body may extract a claim sentence from the target patent document through a keyword search. Then, the execution body may determine whether the claim sentence corresponds to a product claim. Finally, in response to determining that the claim sentence corresponds to the product claim, the execution body may extract the component information from the claim sentence.

In some optional implementations of some embodiments, the method further includes: in response to determining that the claim sentence corresponds to the method claim, extracting logical information from the claim sentence to generate logical content information. The logical information may be information used to represent a logical relationship of each step in the method. For example, the execution body may extract the logical information from the claim sentence by searching for a logical keyword. The logical keyword may be artificially set according to a writing specification of claims. For example, the logical keyword may be "according to", "so as to", or "and". For example, a claim sentence includes "obtaining a word text according to an obtained target word". In this case, since "according to" and "obtaining" are included, the claim sentence where "according to" and "obtaining" are located may be extracted as the logical information. For another example, a claim sentence includes "sending information to a terminal device, and displaying the information on a display of the terminal device". In this case, since "and" is included, the claim sentence where "and" is located may be extracted as the logical information. The execution body may combine the extracted claim sentences to generate the logical content information.

In some optional implementations of some embodiments, the generating the solution information based on the determined technical solution sentence includes: generating the solution information based on at least one of the following: the determined technical solution sentence, the component content information, and the logical content information.

In some optional implementations of some embodiments, the method further includes: extracting beneficial effect information from the target patent document; and/or extracting technical field information from the target patent document. The generating the patent summary information based on the technical problem information and the solution information includes: generating the patent summary information based on the technical problem information, the solution information and the beneficial effect information; and/or generating the patent summary information based on the technical problem information, the solution information, and the technical field information; and/or generating the patent summary information based on the technical problem information, the solution information, the beneficial effect information, and the technical field information.

In some optional implementations of some embodiments, the extracting technical field information from the target patent document includes: determining, from the target patent document, a chapter where the technical field information is located; and extracting the technical field information from the chapter.

According to the method for generating patent summary information provided in some embodiments of the present disclosure, the patent summary information may be generated in the following manner. First, technical field information is extracted from a target patent document. Second, technical problem information is extracted from the target patent document. Then, solution information is extracted from the target patent document. Next, beneficial effect information is extracted from the target patent document. Finally, the patent summary information is generated based on the technical field information, the technical problem information, the solution information and the beneficial effect information. Through extraction and integration of the foregoing information, simplification of an original patent document is implemented while useful information is retained, so that a reading time of the patent document may be reduced and reading efficiency is improved. In addition, based on the extraction and the integration of the foregoing information, a patent may be accurately classified (for example, patent classification is performed based on an extracted technical field, an extracted technical problem, an extracted solution, an extracted beneficial effect, or the like). In addition, the extraction and the integration of the foregoing information also help improve accuracy of retrieval.

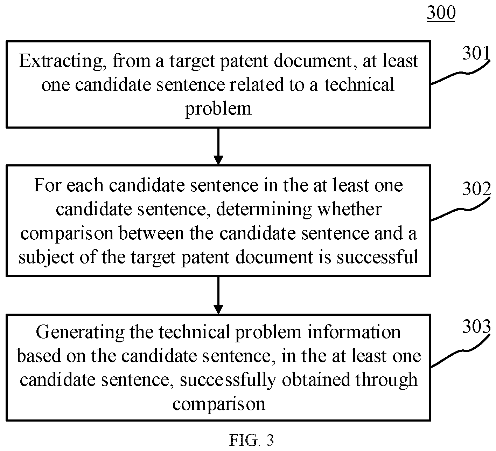

Referring to FIG. 3, FIG. 3 is a flowchart 300 of a method for generating technical problem information according to an embodiment of the present disclosure. The method for generating technical problem information includes the following steps.

Step 301: Extracting, from a target patent document, at least one candidate sentence related to a technical problem.

In some embodiments, the execution body may perform extraction on the target patent document to obtain the at least one candidate sentence related to the technical problem. To perform extraction on the target patent document, first, a keyword search is performed on the target patent document. Then, a sentence where a keyword is located is extracted as the candidate sentence. The keyword may include words used to represent the technical problem, such as "problem", "deficiency", "technical problem", and "technical point".

Step 302: For each candidate sentence in the at least one candidate sentence, determining whether comparison between the candidate sentence and a subject of the target patent document is successful.

In some embodiments, the execution body may first determine the subject of the target patent document. Then, each candidate sentence is compared with the subject. The subject of the target patent document may be a title of the target patent document, or may be a subject matter name in claims. Herein, the comparison may be a semantic comparison between the candidate sentence and the subject, and if they are semantically consistent, it is determined that the comparison is successful. For example, if the candidate sentence is "there is a problem of large traffic consumption", and the subject of the patent document is "a method for reducing traffic consumption", it may be determined that the comparison is successful.

Step 303: Generating the technical problem information based on the candidate sentence successfully obtained through comparison in the at least one candidate sentence.

In some embodiments, for example, the execution body may combine a plurality of candidate sentences successfully obtained through comparison to generate the technical problem information.

In some embodiments, the method for generating technical problem information includes the following step.

Inputting a target patent document into a pre-trained extraction model to determine the technical problem information.

The extraction model may be a machine learning model (for example, a classification task model). The extraction model may be obtained through training by using the following steps.

First, obtaining a set of positive training samples and a set of negative training samples.

The positive training samples may be accurate sentences in a sample patent document that are strongly related to the technical problem and are obtained through grammatical analysis methods such as syntactic analysis, part-of-speech analysis, and coreference resolution. The negative training samples may be sentences in the sample patent document that are weakly or irrelevant to the technical problem.

Second, training an initial machine learning model based on the set of positive training samples and the set of negative training samples, to obtain the extraction model.

The obtained extraction model may learn different features of a negative emotion expression and different forms of a problem expression from the training samples, so as to achieve a generalization capability.

In some embodiments, before the target patent document is input into the pre-trained extraction model, various grammatical analysis methods may be used to extract, from the target patent document, at least one candidate sentence related to a technical problem, and then the at least one candidate sentence is input into the pre-trained extraction model. The grammatical analysis methods include but are not limited to at least one of the following: syntactic analysis, part-of-speech analysis, and coreference resolution.

In some embodiments, two extraction manners may be used together to extract the technical problem, and final technical problem information is determined through arbitration of two output results, to improve accuracy of the extraction. One of the extraction manners may be using the pre-trained extraction model, and the other extraction manner may be using a grammatical analysis method.

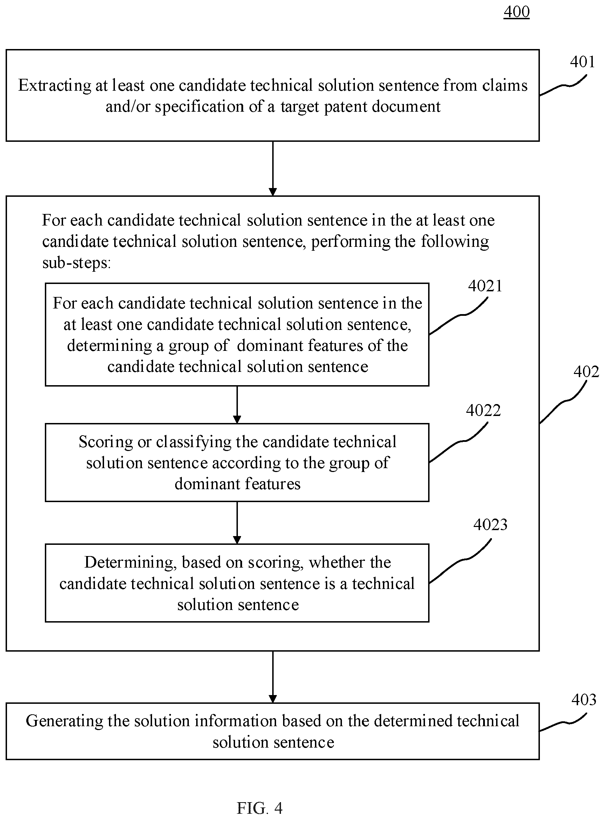

Referring to FIG. 4, FIG. 4 is a flowchart 400 of a method for generating solution information according to an embodiment of the present disclosure. The method for generating solution information includes the following steps.

Step 401: Extracting at least one candidate technical solution sentence from claims and/or specification of a target patent document.

In some embodiments, the execution body performs a keyword detection on the claims and/or the specification of the target patent document, and then extracts a sentence where a detected keyword is located as a candidate technical solution sentence. The candidate technical solution sentence is a sentence, in the specification of the target patent document, related to a technical solution.

In some embodiments, any sentence extracted from the specification of the target patent document may be used as the candidate technical solution sentence.

Step 402: For each candidate technical solution sentence in the at least one candidate technical solution sentence, performing the following sub-steps.

Sub-step 4021: For each candidate technical solution sentence in the at least one candidate technical solution sentence, determining a group of dominant features of the candidate technical solution sentence.

In some embodiments, the execution body may determine the group of dominant features of the candidate technical solution sentence. A dominant feature usually means a feature that may help distinguish between a target object and a non-target object, for example, a property or phenomenon of an object.

Optionally, the group of dominant features may include at least one of the following dominant features: similarity between the candidate technical solution sentence and an independent claim sentence; information about a position of the candidate technical solution sentence in the specification; and a quantity of keywords included in the candidate technical solution sentence.

For example, the similarity between the candidate technical solution sentence and an independent claim sentence may be determined by using an evaluation method of Recall-Oriented Understudy for Gisting Evaluation (ROUGE). The ROUGE evaluation index is one of evaluation indicators in the field of automatic text summarization, which is used to indicate similarity between an automatic text summarization generator and summarization written by experts, mainly referring to similarity in word usage. The ROUGE evaluation method is to evaluate summarization based on co-occurrence information of n-gram in the summarization, and is an n-gram recall-oriented evaluation method.

Optionally, the similarity between the candidate technical solution sentence and the independent claim sentence may alternatively be determined by determining whether lexical collocation of any words in the candidate technical solution sentence has appeared in the independent claim. Such lexical collocation is any collocation of two adjacent words or three or more adjacent words.

In the specification of a patent document, partial paragraphs are related to an important technical solution point of the patent. Such partial paragraphs generally appear in first few paragraphs of the summary in the specification, or in some embodiments in detailed description. Therefore, a relevant sentence of a technical solution has certain positional features, for example, in a specific section of the specification and in a preceding paragraph in the section. The specification of a patent document generally includes a plurality of sections such as technical field, background, summary, and detailed description. The section information may help grasp what is a core theme of sentences and paragraphs in this section. Since each patent document has a different length, it is more reasonable to record a relative position of a technical solution in a patent document as a feature of the technical solution. For example, the information about a position of the candidate technical solution sentence in the specification may be obtained by the following formula: a position of the candidate technical solution sentence in a sentence sequence of the specification/a quantity of sentences in the entire specification. The sentence sequence is a sequence formed by arranging sentences in the entire specification according to an order of appearance.

For example, a keyword included in the candidate technical solution sentence may be words in an independent claim (for example, independent claim 1). Such words may include a noun phrase, a verb phrase, an adjective, an adverb, and the like mentioned in the independent claim.

Sub-step 4022: Scoring or classifying the candidate technical solution sentence according to the group of dominant features.

In some embodiments, the execution body may use each dominant feature in the group of dominant features to score the candidate technical solution sentence, and then obtain a summary score of the candidate technical solution sentence based on a plurality of obtained scores.

In some embodiments, a classifier is used to classify the candidate technical solution sentence according to the group of dominant features. The classifier is pre-trained by labeled sample data, a dominant feature helping identify a target sentence, and a specific algorithm.

Sub-step 4023: Determining, based on scoring, whether the candidate technical solution sentence is a technical solution sentence.

In some embodiments, the execution body may determine, based on a score obtained in Sub-step 4022, a candidate technical solution sentence with the highest score as the technical solution sentence, or a candidate technical solution sentence with a score higher than a preset threshold as the technical solution sentence. For example, the preset threshold may be preset according to actual experience.

In some embodiments, the execution body may determine, based on a classification result obtained in Sub-step 4022, whether the candidate technical solution sentence is the technical solution sentence.

Step 403: Generating the solution information based on the determined technical solution sentence.

In some embodiments, for example, the execution body may combine determined technical solution sentences to generate the solution information.

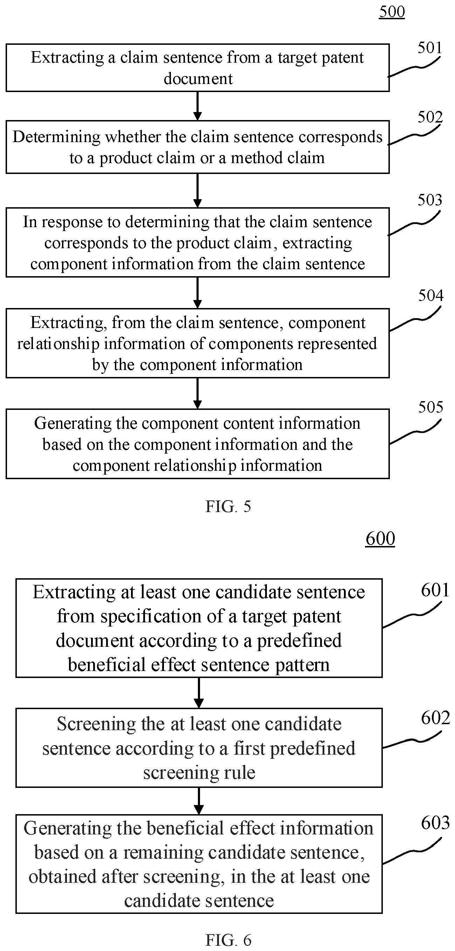

FIG. 5 is a flowchart 500 of a method for generating component content information according to an embodiment of the present disclosure. The method for generating component content information includes the following steps.

Step 501: Extracting a claim sentence from a target patent document.

In some embodiments, an execution body of the method for generating component content information may first extract the claims from the target patent document through a keyword search or structured text extraction. Next, the execution body may recognize a specific character, and extract the claim sentence from the claims. A keyword may be artificially set according to a writing specification of the claims. For example, the keyword may be "claims". The specific character may be a numerical number of each claim in the claims, or may be a period at the end of each claim in the claims. With such numerical number or period, a claim sentence corresponding to each claim may be extracted from the claims.

Step 502: Determining whether the claim sentence corresponds to a product claim or a method claim.

In some embodiments, the execution body may determine, in a plurality of methods, whether the claim sentence corresponds to the product claim. For example, the execution body may perform type keyword detection on the claim sentence to determine whether the claim sentence includes a method type keyword; and in response to determining that the claim sentence does not include a method type keyword, determine that the claim sentence corresponds to the product claim.

The type keyword detection is to perform detection on the claim sentence to determine whether a type keyword may be found. For example, the type keyword may include a method type keyword and a product type keyword. The method type keyword may be a word for indicating a method, a process, or a usage. The product type keyword may be a word for indicating a component or a relationship between components. For example, the method type keyword may be "method", "process", or "step". For example, a claim sentence includes "a method for peeling an apple". In this case, since the claim sentence includes "method", the claim sentence generally corresponds to the method claim sentence. For another example, a claim sentence includes "a pot for making soup". In this case, since the claim sentence does not include a method type keyword, the claim sentence generally corresponds to the product claim. A method claim often includes a method type keyword, and such claim often includes descriptions of a plurality of implementation steps. Therefore, such features may be used to determine whether a claim is the method claim. If the claim does not belong to the method claim, it belongs to the product claim.

In some optional implementations of some embodiments, the execution body may train a classifier in a machine learning manner to determine a type of the claim sentence. For example, an initial Convolutional Neural Network (CNN) may be trained by using training data labeled with claim types, and the trained CNN is used as the classifier. Generalization capability of the classifier obtained in this way is better than that obtained in a recognition manner that is based on a type keyword. If the training data includes data for a special case, the classifier may also handle the special case well. In addition, the trained classifier may help classify a finer claim type (such as a chemical type, or a computer software type) more easily. Therefore, it is helpful to use a targeted processing method (for example, using a domain-related dictionary or a word segmentation tool) in subsequent work.

Step 503: In response to determining that the claim sentence corresponds to the product claim, extracting component information from the claim sentence.

In some embodiments, the execution body may extract the component information from the claim sentence in response to determining that the claim sentence corresponds to the product claim. For example, the execution body may use a trained neural network to extract component information. The neural network may be trained by using labeled data. Labeled content includes the claim sentence and a component or another part directly included in the claim sentence. The component generally refers to a part of a product. The component information may include, but is not limited to, at least one of the following: a name of the component, and specification information (such as length, width, and height) of the component.

In some optional implementations of some embodiments, the execution body may extract component information from the claim sentence based on a predefined claim writing rule. For example, a claim writing rule may be as follows: "component information (for example, a component name) of an important component should be at the beginning of a clause split with a semicolon or a newline". However, in some claim sentences, the component information of the important component appears at the beginning of a clause split with a comma or only in one preceding clause. Therefore, these cases need to be considered, and different rules are used for extraction in different cases.

Step 504: Extracting, from the claim sentence, component relationship information of components represented by the component information.

In some embodiments, the execution body may extract, by using some common relational expressions, the component relationship information of components represented by the component information. The component relationship information may be used to describe a relationship between one component and another in a product. A component relationship such as "inclusion relation" is used as an example, and the relationship expression may usually be expressed as follows: "A has/includes/comprises B", or "A comprises B" in a corresponding Chinese form.

Sometimes the following problems also need to be considered: First, coreference, for example, "a pen, ..., the pen has a hat"; and second, coordinate structure, for example, "the present invention includes a housing, a battery, and a motor". For the coreference, an article (such as "a/the" in English) or context (such as "a" or "the" in Chinese) to distinguish and use similarity (such as an edit distance) to perform coreference resolution. For example, "a pen" is corresponding to "the pen". Such problems may alternatively be resolved in another manner. For the coordinate structure, a rule may be used. For example, an "xx, xxx, and xx" structure is used to express a coordinating relation. A manner of syntactic analysis may alternatively be used to assist in resolving such problems. For example, dependency parsing is used to determine whether a plurality of components depend on a same verb that indicates inclusion (for example, "has" or "have").

Step 505: Generating the component content information based on the component information and the component relationship information.

In some embodiments, the execution body may generate the component content information based on the component information obtained in Step 503 and the component relationship information obtained in Step 504. For example, the component information and the component relationship information may be directly combined together as the component content information.

Referring to FIG. 6, FIG. 6 is a flowchart 600 of a method for generating beneficial effect information according to an embodiment of the present disclosure. The method for generating beneficial effect information includes the following steps.

Step 601: Extracting at least one candidate sentence from specification of a target patent document according to a predefined beneficial effect sentence pattern.

In some embodiments, the predefined beneficial effect sentence pattern may be a sentence pattern that is preset according to a writing rule or a writing habit and is related to a beneficial effect of a patent document. For example, the predefined beneficial effect sentence pattern may be as follows: "predicate verb + noun". The "predicate verb" herein may be, for example, a verb such as "improve" or "increase". The "noun" herein may be, for example, "performance" or "effect".

For any sentence in the specification of the target patent document, if conforming to the foregoing sentence pattern, the sentence may be used as the candidate sentence.

Step 602: Screening the at least one candidate sentence according to a first predefined screening rule.

In some embodiments, a collocation rule may be set first. For example, some specific "predicate verbs" can only be used with a specific "noun". For example, a verb group 1 includes "reduce", "avoid", "eliminate", and "decrease"; and a noun group 1 includes "loss", "failure", and "pollution". A verb group 2 includes "improve", "enhance", and "increase"; and a noun group 2 includes "quality", "ease", and "efficiency". In this case, the collocation rule may be as follows: a verb in the verb group 1 can only be collocated with a noun in the noun group 1, and a verb in the verb group 2 can only be collocated with a noun in the noun group 2.

For example, the first predefined screening rule may be to filter out a candidate sentence that does not meet the collocation rule.

Step 603: Generating the beneficial effect information based on a remaining candidate sentence, obtained after screening, in the at least one candidate sentence.

In some embodiments, for example, the execution body may combine remaining candidate sentences to generate the beneficial effect information.

In some optional implementations of some embodiments, the generating the beneficial effect information based on a remaining candidate sentence, obtained after screening, in the at least one candidate sentence includes: determining context of the remaining candidate sentence in the target patent document; and generating the beneficial effect information based on the remaining candidate sentence and the context.

In some optional implementations of some embodiments, the method further includes: determining a morphological feature of the remaining candidate sentence in the target patent document; and adjusting at least one of the predefined beneficial effect sentence pattern and the first predefined screening rule based on the morphological feature.

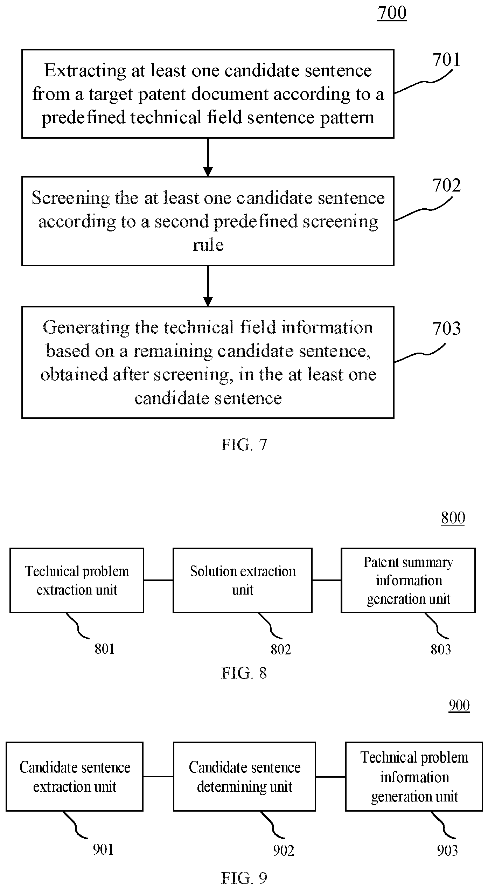

Referring to FIG. 7, FIG. 7 is a flowchart 700 of a method for generating technical field information according to an embodiment of the present disclosure. The method for generating technical field information includes the following steps.

Step 701: Extracting at least one candidate sentence from a target patent document according to a predefined technical field sentence pattern.

In some embodiments, the predefined technical field sentence pattern may be a sentence pattern that is preset according to a writing rule or a writing habit and is related to the technical field of a patent document. For example, the predefined technical field sentence pattern may be as follows: " 'invention/disclosure/application' + 'relate/pertain/concern' ", or the predefined technical field sentence pattern may be as follows in English: " 'invention/disclosure/application' + 'be/preposition' + 'relate/pertain/concern' ". For any sentence in specification of the target patent document, if conforming to the foregoing sentence pattern, the sentence may be used as the candidate sentence.

Step 702: Screening the at least one candidate sentence according to a second predefined screening rule.

In some embodiments, a second predefined screening rule may be set first. For example, the second predefined screening rule may be as follows. If a specific word appears in the candidate sentence, the candidate sentence is filtered out. For example, the specific word may include, but is not limited to, at least one of the following: claims, not, persons skilled in the art. For another example, the second predefined screening rule may alternatively be as follows. If the candidate sentence appears in description of a drawing, the candidate sentence is filtered out.

Step 703: Generating the technical field information based on a remaining candidate sentence, obtained after screening, in the at least one candidate sentence.

In some embodiments, for example, the execution body may combine remaining candidate sentences to generate the technical field information.

Referring to FIG. 8, FIG. 8 is a schematic structural diagram of an apparatus for generating patent summary information according to an embodiment of the present disclosure. The apparatus embodiment corresponds to the method embodiment illustrated in FIG. 2, and the apparatus may be applied to various electronic devices.

As shown in FIG. 8, an apparatus 800 for generating patent summary information in some embodiments includes: a technical problem extraction unit 801, a solution extraction unit 802, and a patent summary information generation unit 803. The technical problem extraction unit 801 is configured to extract technical problem information from a target patent document. The solution extraction unit 802 is configured to extract solution information from the target patent document. The patent summary information generation unit 803 is configured to generate the patent summary information based on the technical problem information and the solution information.

Referring to FIG. 9, FIG. 9 is a schematic structural diagram of an apparatus for generating technical problem information according to an embodiment of the present disclosure. The apparatus embodiment corresponds to the method embodiment illustrated in FIG. 3, and the apparatus may be applied to various electronic devices.

As shown in FIG. 9, an apparatus 900 for generating technical problem information in some embodiments includes: a candidate sentence extraction unit 901, a candidate sentence determining unit 902, and a technical problem information generation unit 903. The candidate sentence extraction unit 901 is configured to extract, from a target patent document, at least one candidate sentence related to a technical problem. The candidate sentence determining unit 902 is configured to determine a target candidate sentence from the at least one candidate sentence, where the target candidate sentence includes at least one of the following: a sentence matched with a subject of the target patent document; and a sentence of a predefined category. The technical problem information generation unit 903 is configured to generate the technical problem information based on the determined target candidate sentence.

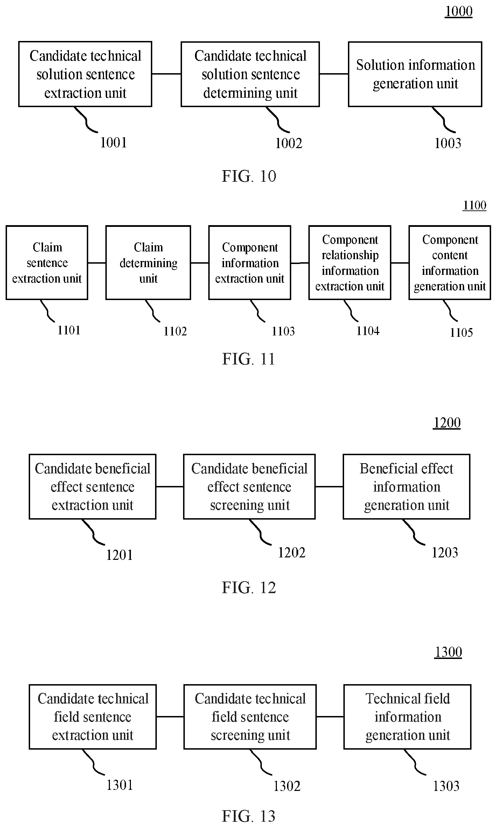

Referring to FIG. 10, FIG. 10 is a schematic structural diagram of an apparatus for generating solution information according to an embodiment of the present disclosure. The apparatus embodiment corresponds to the method embodiment illustrated in FIG. 4, and the apparatus may be applied to various electronic devices.

As shown in FIG. 10, an apparatus 1000 for generating solution information in some embodiments includes: a candidate technical solution sentence extraction unit 1001, a candidate technical solution sentence determining unit 1002, and a solution information generation unit 1003. The candidate technical solution sentence extraction unit 1001 is configured to extract at least one candidate technical solution sentence from claims and/or specification of a target patent document. The candidate technical solution sentence determining unit 1002 is configured to: for each candidate technical solution sentence in the at least one candidate technical solution sentence, determine a group of dominant features of the candidate technical solution sentence, score or classify the candidate technical solution sentence according to the group of dominant features, and determine, based on scoring, whether the candidate technical solution sentence is a technical solution sentence. The solution information generation unit 1003 is configured to generate the solution information based on the determined technical solution sentence.

Referring to FIG. 11, FIG. 11 is a schematic structural diagram of an apparatus for generating component content information according to an embodiment of the present disclosure. The apparatus embodiment corresponds to the method embodiment illustrated in FIG. 5, and the apparatus may be applied to various electronic devices.

As shown in FIG. 11, an apparatus 1100 for generating component content information in some embodiments includes: a claim sentence extraction unit 1101, a claim determining unit 1102, a component information extraction unit 1103, a component relationship information extraction unit 1104, and a component content information generation unit 1105. The claim sentence extraction unit 1101 is configured to extract a claim sentence from a target patent document. The claim determining unit 1102 is configured to determine whether the claim sentence corresponds to a product claim or a method claim. The component information extraction unit 1103 is configured to: in response to determining that the claim sentence corresponds to the product claim, extract component information from the claim sentence. The component relationship information extraction unit 1104 is configured to extract, from the claim sentence, component relationship information of components represented by the component information. The component content information generation unit 1105 is configured to generate component content information based on the component information and the component relationship information.

Referring to FIG. 12, FIG. 12 is a schematic structural diagram of an apparatus for generating beneficial effect information according to an embodiment of the present disclosure. The apparatus embodiment corresponds to the method embodiment illustrated in FIG. 6, and the apparatus may be applied to various electronic devices.

As shown in FIG. 12, an apparatus 1200 for generating beneficial effect information in some embodiments includes: a candidate beneficial effect sentence extraction unit 1201, a candidate beneficial effect sentence screening unit 1202, and a beneficial effect information generation unit 1203. The candidate beneficial effect sentence extraction unit 1201 is configured to extract at least one candidate sentence from specification of a target patent document according to a predefined beneficial effect sentence pattern. The candidate beneficial effect sentence screening unit 1202 is configured to screen the at least one candidate sentence according to a first predefined screening rule. The beneficial effect information generation unit 1203 is configured to generate the beneficial effect information based on a remaining candidate sentence, obtained after screening, in the at least one candidate sentence.

Referring to FIG. 13, FIG. 13 is a schematic structural diagram of an apparatus for generating technical field information according to an embodiment of the present disclosure. The apparatus embodiment corresponds to the method embodiment illustrated in FIG. 7, and the apparatus may be applied to various electronic devices.

As shown in FIG. 13, an apparatus 1300 for generating technical field information in some embodiments includes: a candidate technical field sentence extraction unit 1301, a candidate technical field sentence screening unit 1302, and a technical field information generation unit 1303. The candidate technical field sentence extraction unit 1301 is configured to extract at least one candidate sentence from a target patent document according to a predefined technical field sentence pattern. The candidate technical field sentence screening unit 1302 is configured to screen the at least one candidate sentence according to a second predefined screening rule. The technical field information generation unit 1303 is configured to generate the technical field information based on a remaining candidate sentence, obtained after screening, in the at least one candidate sentence.

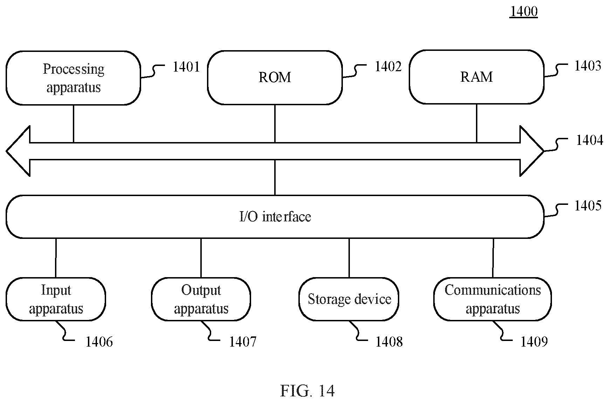

Referring to FIG. 14, FIG. 14 is a schematic structural diagram of an electronic device (for example, the electronic device in FIG. 1) 1400 according to an embodiment of the present disclosure. The electronic device shown in FIG. 14 is only exemplary and shall not form any limitation to the functions and the application scope of the embodiments of the present disclosure.

As shown in FIG. 14, the electronic device 1400 may include a processing apparatus (such as a central processing unit and a graphics processing unit) 1401, which may perform various appropriate actions and processing based on a program stored in a Read-Only Memory (ROM) 1402 or a program loaded from a storage device 1408 into a Random Access Memory (RAM) 1403. The RAM 1403 further stores various programs and data required for operations of the electronic device 1400. The processing apparatus 1401, the ROM 1402, and the RAM 1403 are mutually connected by using a bus 1404. An Input/Output (I/O) interface 1405 is also connected to the bus 1404.

Generally, the following apparatuses may be connected to the I/O interface 1405: an input apparatus 1406 including, for example, a touchscreen, a touchpad, a keyboard, a mouse, a camera, a microphone, an accelerometer, and a gyroscope; an output apparatus 1407 including, for example, a Liquid Crystal Display (LCD), a speaker, and a vibrator; the storage device 1408, including, for example, a magnetic tape, and a hard disk; and a communications apparatus 1409. The communications apparatus 1409 may enable the electronic device 1400 to communicate with another device wirelessly or by wire to exchange data. Although FIG. 14 shows the electronic device 1400 including various apparatuses, the electronic device 1400 is not required to implement or include all the shown apparatuses. The electronic device 1400 may alternatively implement or include more or fewer apparatuses. Each block shown in FIG. 14 may represent one apparatus, or may represent a plurality of apparatuses as required.

According to some embodiments of the present disclosure, the process described above with reference to the flowchart may be implemented as a computer software program. For example, some embodiments of the present disclosure includes a computer program product including a computer program carried by a non-transitory computer readable medium. The computer program includes program code for executing the method shown in the flowchart. In these embodiments, the computer program may be downloaded from a network by means of the communications apparatus 1409 and installed, or be installed from the storage device 1408 or the ROM 1402. When the computer program is executed by the processing apparatus 1401, the foregoing functions defined in the methods of some embodiments of the present disclosure are performed.

The non-transitory computer readable medium described in some embodiments of the present disclosure may be a non-transitory computer readable signal medium or a non-transitory computer readable storage medium or any combination thereof. The non-transitory computer readable storage medium may be, for example, but not limited to, an electronic, magnetic, optical, electromagnetic, infrared, or semiconductor system, apparatus, or means, or any combination thereof. Examples of the non-transitory computer readable storage medium may include, but are not limited to: an electrical connection with one or more conducting wires, a portable computer disk, a hard disk, a RAM, a ROM, an Erasable Programmable Read-Only Memory (an EPROM or a flash memory), an optical fiber, a portable Compact Disc-ROM (CD-ROM), an optical storage device, a magnetic storage device, or any suitable combination thereof. In some embodiments of the present disclosure, the non-transitory computer readable storage medium may be any tangible medium including or storing a program, and the program may be used by or used in combination with an instruction execution system, apparatus or means. In some embodiments of the present disclosure, the non-transitory computer readable signal medium may include a data signal propagated in a baseband or as a part of a carrier, and computer readable program code is carried therein. Such a propagated data signal may use a variety of forms including, but not limited to, an electromagnetic signal, an optical signal, or any suitable combination thereof. The non-transitory computer readable signal medium may alternatively be any non-transitory computer readable medium other than a non-transitory computer readable storage medium. The non-transitory computer readable signal medium may transmit, propagate, or transport a program used by or in connection with an instruction execution system, apparatus, or means. Program code embodied on a non-transitory computer readable medium may be transmitted by any suitable medium, including but not limited to wire, optical cable, Radio Frequency (RF), or the like, or any suitable combination thereof.

In some implementations, a client and a server may communicate by using any known or a future developed network protocol such as Hyper Text Transfer Protocol (HTTP), and may communicate and interconnect with digital data in any form or medium (for example, a communication network). Examples of communication networks include a Local Area Network (LAN), a Wide Area Network (WAN), an Internet work (such as, the Internet), and a peer-to-peer network (such as, an ad hoc peer-to-peer network), as well as any known or a future developed network.

The non-transitory computer readable medium may be contained in the electronic device, or may exist alone without being assembled in the electronic device. The non-transitory computer readable medium may carry one or more programs. When being executed by the electronic device, the one or more programs enable the electronic device to: extract technical problem information from a target patent document; extract solution information from the target patent document; and generate patent summary information based on the technical problem information and the solution information.

The computer program code for executing the operations in some embodiments of the present disclosure may be compiled by using one or more programming languages or a combination thereof. The programming languages include object oriented programming languages, such as Java, Smalltalk, and C++, and conventional procedural programming languages, such as C or similar programming languages. The program code may be executed fully on a user computer, executed partially on a user computer, executed as an independent software package, executed partially on a user computer and partially on a remote computer, or executed fully on a remote computer or a server. When a remote computer is involved, the remote computer may be connected to the user computer via any type of network including a LAN or WAN, or may be connected to an external computer (for example, connected via the Internet by using an Internet service provider).

The flowcharts and block diagrams in the accompanying drawings illustrate architectures, functions, and operations of possible implementations of the system, method, and computer program product according to various embodiments of the present disclosure. In this regard, each block in the flowcharts or block diagrams may represent a module, a program segment or a part of code, and the module, the program segment or the part of code includes one or more executable instructions for implementing specified logic functions. In some alternative implementations, functions marked in the blocks may also take place in an order different from the order marked in the accompanying drawings. For example, two successively shown blocks actually may be executed in parallel substantially, or may be executed in reverse order sometimes, depending on the functions involved. It should also be noted that each block in the flowcharts and/or block diagrams and combinations of the blocks in the flowcharts and/or block diagrams may be implemented by a dedicated hardware-based system for executing specified functions or operations, or may be implemented by a combination of dedicated hardware and computer instructions.

The units described in some embodiments of the present disclosure may be implemented in a form of software or in a form of hardware. The described units may alternatively be set in a processor, which, for example, may be described as a processor including a technical problem extraction unit, a solution extraction unit, and a patent summary information generation unit. The name of each unit does not constitute a limitation to the unit itself in a case, for example, the technical problem extraction unit may alternatively be described as "a unit for extracting technical problem information from a target patent document".

The functions described herein above may be performed, at least in part, by one or more hardware logic components. For example, without limitation, exemplary types of the hardware logic components that may be used include: a Field Programmable Gate Array (FPGA), an Application Specific Integrated Circuit (ASIC), an Application Specific Standard Parts (ASSP), a System-On-a-Chip (SOC), a Complex Programmable Logic Device (CPLD) and the like.

## Claims

1. A method for generating patent summary information, comprising:
extracting technical problem information from a target patent document;
extracting solution information from the target patent document; and
generating patent summary information based on the technical problem information and the solution information.

2. The method according to claim 1, wherein the extracting technical problem information from a target patent document comprises:
inputting the target patent document into a pre-trained extraction model to obtain the technical problem information.

3. The method according to claim 1, wherein the extracting technical problem information from a target patent document comprises:
extracting, from the target patent document, at least one candidate sentence related to a technical problem;
determining a target candidate sentence from the at least one candidate sentence, wherein the target candidate sentence comprises at least one of the following: a sentence matched with a subject of the target patent document, and a sentence of a predefined category; and
generating the technical problem information based on the determined target candidate sentence.

4. The method according to claim 1, wherein the extracting solution information from the target patent document comprises:
extracting at least one candidate technical solution sentence from at least one of claims and specification of the target patent document;
for each candidate technical solution sentence in the at least one candidate technical solution sentence, determining a group of dominant features of the candidate technical solution sentence, scoring or classifying the candidate technical solution sentence according to the group of dominant features, and determining, based on a result of scoring or classification, whether the candidate technical solution sentence is a technical solution sentence; and
generating the solution information based on the determined technical solution sentence.

5. The method according to claim 4, further comprising:
in response to the at least one candidate technical solution sentence comprising a claim sentence, determining whether the claim sentence corresponds to a product claim or a method claim;
in response to determining that the claim sentence corresponds to the product claim, extracting component information from the claim sentence;
extracting, from the claim sentence, component relationship information of components represented by the component information; and
generating component content information based on the component information and the component relationship information.

6. The method according to claim 5, further comprising:
in response to determining that the claim sentence corresponds to the method claim, extracting logical information from the claim sentence to generate logical content information.

7. The method according to claim 6, wherein the generating the solution information based on the determined technical solution sentence comprises:
generating the solution information based on at least one of the following: the determined technical solution sentence, the component content information, and the logical content information.

8. The method according to any one of claims 1 to 7, further comprising at least one of the following:
extracting beneficial effect information from the target patent document; and
extracting technical field information from the target patent document; and
the generating patent summary information based on the technical problem information and the solution information comprises:
generating the patent summary information based on the technical problem information, the solution information and the beneficial effect information; or
generating the patent summary information based on the technical problem information, the solution information and the technical field information; or
generating the patent summary information based on the technical problem information, the solution information, the beneficial effect information and the technical field information.

9. A method for generating technical problem information, comprising:
extracting, from a target patent document, at least one candidate sentence related to a technical problem;
determining a target candidate sentence from the at least one candidate sentence, wherein the target candidate sentence comprises at least one of the following: a sentence matched with a subject of the target patent document and a sentence of a predefined category; and
generating the technical problem information based on the determined target candidate sentence.

10. The method according to claim 9, wherein the extracting, from a target patent document, at least one candidate sentence related to a technical problem comprises:
performing a keyword search on the target patent document; and
determining a sentence where the keyword is located as the at least one candidate sentence.

11. The method according to claim 9, wherein the sentence of a predefined category is determined in the following manner:
inputting each of the at least one candidate sentence into a pre-trained extraction model to determine whether the candidate sentence is the sentence of a predefined category.

12. A method for generating solution information, comprising:
extracting at least one candidate technical solution sentence from at least one of claims and specification of a target patent document;
for each candidate technical solution sentence in the at least one candidate technical solution sentence, determining a group of dominant features of the candidate technical solution sentence, scoring or classifying the candidate technical solution sentence according to the group of dominant features; and determining, based on a result of scoring or classification, whether the candidate technical solution sentence is a technical solution sentence; and
generating the solution information based on the determined technical solution sentence.

13. The method according to claim 12, wherein the group of dominant features comprises at least one of the following: similarity between the candidate technical solution sentence and an independent claim sentence; information about a position of the candidate technical solution sentence in specification; and a quantity of keywords comprised in the candidate technical solution sentence.

14. A method for generating component content information, comprising:
extracting a claim sentence from a target patent document;
determining whether the claim sentence corresponds to a product claim or a method claim;
in response to determining that the claim sentence corresponds to the product claim, extracting component information from the claim sentence;
extracting, from the claim sentence, component relationship information of components represented by the component information; and
generating the component content information based on the component information and the component relationship information.

15. The method according to claim 14, wherein the extracting component information from the claim sentence comprises:
extracting the component information from the claim sentence based on a predefined claim writing rule.

16. The method according to claim 14, the determining whether the claim sentence corresponds to a product claim or a method claim comprises:
performing type keyword detection on the claim sentence to determine whether the claim sentence comprises a method type keyword;
in response to determining that the claim sentence comprises a method type keyword, determining that the claim sentence corresponds to the method claim; and
in response to determining that the claim sentence does not comprise a method type keyword, determining that the claim sentence corresponds to the product claim.

17. An apparatus for generating patent summary information, comprising:
a technical problem extraction unit, configured to extract technical problem information from a target patent document;
a solution extraction unit, configured to extract solution information from the target patent document; and
a patent summary information generation unit, configured to generate the patent summary information based on the technical problem information and the solution information.

18. An apparatus for generating technical problem information, comprising:
a candidate sentence extraction unit, configured to extract, from a target patent document, at least one candidate sentence related to a technical problem;
a candidate sentence determining unit, configured to determine a target candidate sentence from the at least one candidate sentence, wherein the target candidate sentence comprises at least one of the following: a sentence successfully obtained after being compared with a subj ect of the target patent document; and a sentence of a predefined category; and
a technical problem information generation unit, configured to generate the technical problem information based on the determined target candidate sentence.

19. An apparatus for generating solution information, comprising:
a candidate technical solution sentence extraction unit, configured to extract at least one candidate technical solution sentence from at least one of claims part and specification part of a target patent document;
a candidate technical solution sentence determining unit, configured to: for each candidate technical solution sentence in the at least one candidate technical solution sentence, determine a dominant feature group of the candidate technical solution sentence, score or classify the candidate technical solution sentence according to the dominant feature group, and determine, based on a result of scoring or classification, whether the candidate technical solution sentence is a technical solution sentence; and
a solution information generation unit, configured to generate the solution information based on the determined technical solution sentence.

20. An apparatus for generating component content information, comprising:
a claim sentence extraction unit, configured to extract a claim sentence from a target patent document;
a claim determining unit, configured to determine whether the claim sentence corresponds to a product claim or a method claim;
a component information extraction unit, configured to: in response to determining that the claim sentence corresponds to the product claim, extract component information from the claim sentence;
a component relationship information extraction unit, configured to extract, from the claim sentence, component relationship information of components represented by the component information; and
a component content information generation unit, configured to generate component content information based on the component information and the component relationship information.

21. An electronic device, comprising:
at least one processor; and
a storage apparatus, configured to store at least one program, wherein
when the at least one program is executed by the at least one processor, the at least one processor is enabled to implement the method according to any one of claims 1 to 16.

22. A non-transitory computer readable storage medium, storing a computer program, wherein the program, when executed by a processor, implements the method according to any one of claims 1 to 16.
